# EUROPÄISCHE PATENTANMELDUNG

(11) **EP 1 988 261 A1**
(43) Veröffentlichungstag der Anmeldung: **05.11.2008**
(21) Anmeldenummer: 07107491.8
(22) Anmeldetag: 04.05.2007
(51) Int. Cl.: F01D 25/24, F02C 7/28

(54) **Gehäusedichtung**

(71) Anmelder: ABB Turbo Systems AG, 5400 Baden (CH)
(72) Erfinder: Schlienger, Joel, CH-8008 Zürich (CH); Thiele, Martin, CH-5236 Remigen (CH); Meier, Reto, CH-5312 Döttingen (CH); Gwehenberger, Tobias, CH-8044 Zürich (CH)
(74) Vertreter: ABB Patent Attorneys

(57) **Zusammenfassung**

Die Verbindung der durch Kraft- oder Formschluss miteinander verklemmten Gehäuseteile (1, 2) umfasst mindestens ein zusätzliches Dichtungselement (7), welches verhindert, dass unzulässige Medien, also etwa Abgase oder im Abgas mitgeführte Stoffe, aus dem Strömungskanal in die Umgebung der Abgasturbine gelangen.

## Beschreibung

### Technisches Gebiet

Die Erfindung bezieht sich auf das Gebiet der mit Abgasen von Brennkraftmaschinen beaufschlagten Turbinen. Sie betrifft die Abdichtung eines mehrteilig ausgebildeten Gehäuses, insbesondere eine Abdichtung zwischen einem Lagergehäuse und einem Turbinengehäuse der Abgasturbine.

### Stand der Technik

Abgasturbinen werden in Abgasturboladern zum Aufladen von Brennkraftmaschinen oder in Nutzturbinen zum Umwandeln der in den Abgasen von Brennkraftmaschinen enthaltenen Energie in mechanische oder elektrische Energie eingesetzt.

Bei herkömmlichen Abgasturbinen kleinerer Baureihen wird das radial äussere Turbinengehäuse mit dem Lagergehäuse in der Regel mittels Befestigungslaschen und mehreren Schrauben verklemmt. Ein solcher Klemmverbund ist beispielsweise in der Fig. 1 der EP 1 428 983 A1, deren Offenbarungsgehalt hiermit durch Bezugnahme eingeschlossen wird, dargestellt. Der turbinenseitige und axial wirkende Klemmverbund wird zusätzlich für die Befestigung des Leitapparates (Düsenring) sowie gegebenenfalls einer axial zwischen Lagergehäuse und Turbinenrad angeordneten Zwischenwand verwendet. Eine solche Zwischenwand dient in der Regel als thermischer Isolator zwischen dem Abgaskanal und dem gekühlten Lagergehäuse.

Wie aus der Fig. 1 der EP 1 460 237 A1, deren Offenbarungsgehalt hiermit durch Bezugnahme eingeschlossen wird, hervorgeht, können auch andere und/ oder weitere Gehäuseelemente in den Klemmverbund zwischen dem Lagergehäuse und dem Turbinengehäuse mit eingeschlossen sein. In diesem Fall handelt es sich um ein Zentrierungselement, welches radial zwischen dem Lagergehäuse und dem Turbinengehäuse für eine optimale Zentrierung sorgt und hierfür axial zwischen den Befestigungslaschen und dem Turbinengehäuse eingeklemmt ist.

Nebst dem Zusammenhalten der diversen Komponenten übernimmt der Klemmverbund auch eine zusätzliche Dichtfunktion zwischen dem druckbeaufschlagten Abgaskanal und der Umgebung der Abgasturbine. Die axiale Verpressung der unterschiedlichen Flanschpartien der Gehäuse ist hinsichtlich der Gasdichtheit für die meisten Anwendungen ausreichend.

Bei extremen thermischen Belastungszyklen kann der turbinenseitige Klemmverbund aufgrund des unterschiedlichen Wärmeausdehnungsverhaltens der gegeneinander verklemmten Gehäuseteilen sowie der ungleichen Materialtemperaturen innerhalb der Komponenten stark belastet werden. Diese Einflüsse können wiederum zu einer Änderung der relativen Lage der einzelnen Bauteile führen, wodurch natürlich die Dichtwirkung des Klemmverbunds nachteilig beeinträchtigt werden kann.

### Kurze Darstellung der Erfindung

Die Aufgabe der vorliegenden Erfindung besteht darin, die Gasdichtheit einer Verbindung zwischen den Gehäuseteilen einer Abgasturbine zu optimieren.

Erfindungsgemäss wird dies durch Auftrennung der Funktionen der die Gehäuseteile verbindenden Klemmung und der Dichtung erreicht.

Die Verbindung der durch Kraft- oder Formschluss miteinander verklemmten Gehäuseteile umfasst erfindungsgemäss mindestens ein zusätzliches Dichtungselement, welches verhindert, dass unzulässige Medien, also etwa Abgase oder im Abgas mitgeführte Stoffe, aus dem Strömungskanal in die Umgebung der Abgasturbine gelangen. Es dichtet einen von den miteinander verklemmten Gehäusen gebildeten Spalt ab, welcher direkt, oder indirekt, vom Strömungskanal in die Umgebung der Abgasturbine führt.

Für die kraft- oder formschlüssige Verbindung sind aneinander gefügte Auflageflächen vorgesehen. Durch die thermischen Belastungen der Gehäuseteilen können sich diese in radialer und axialer Richtungen verziehen, was zu Relativverschiebungen im Bereich der Auflageflächen führt und die Dichtwirkung der Verbindung reduziert. Die deformationsbedingte Erhöhung der Gasleckage wird durch die axiale und radiale Nachgiebigkeit der Dichtung weitgehend kompensiert. Die damit erreichbare Dichtwirkung wird dadurch selbst für Anwendungen mit extremen thermischen Anforderungen sichergestellt. Durch die Verwendung eines Dichtelements lässt sich somit eine Auftrennung der Funktionen in Flanschdichtheit (Dichtelement) und Verklemmung der Gehäuseteile mittels Befestigungslaschen erreichen.

Ein optionales, weiteres Dichtelement, angeordnet etwa zwischen dem Lagergehäuse und der Zwischenwand, sorgt dafür, dass der druckbeaufschlagte Strömungskanal und somit das mit Russpartikel verschmutzte Abgas im Wesentlichen durch zwei temperaturresistente und flexible Dichtelemente gegenüber der Umgebung gänzlich abgedichtet werden können.

Weitere Vorteile ergeben sich aus den abhängigen Ansprüchen.

### Kurze Beschreibung der Zeichnungen

Nachfolgend sind anhand der Zeichnungen Ausführungsformen der erfindungsgemässen Abdichtung zwischen einem Lagergehäuse und einem Turbinengehäuse einer Abgasturbine beschrieben. Hierbei zeigt
- Fig. 1: Einen Übergang zwischen dem Lagergehäuse und dem Turbinengehäuse einer Abgasturbine, wobei zwischen dem Lagergehäuse und dem Turbinengehäuse eine Zwischenwand und ein Befestigungsflansch eines Düsenrings festgeklemmt sind, mit einer Abdichtung gemäss dem Stand der Technik,
- Fig. 2: den Übergang nach Fig. 1 in einer vereinfachten Ausführungsform ohne Zwischenwand zwischen dem Lagergehäuse und dem Turbinengehäuse und ohne Verklemmung eines Düsenrings im Klemmverbund, mit einer erfindungsgemässen Abdichtung,
- Fig.3: den Übergang nach Fig. 1, in einer vereinfachten Ausführungsform ohne Zwischenwand zwischen dem Lagergehäuse und dem Turbinengehäuse, mit einer erfindungsgemässen Abdichtung,
- Fig. 4: den Übergang nach Fig. 1, mit einer erfindungsgemässen Abdichtung mit einem Dichtelement,
- Fig. 5: den Übergang nach Fig. 1, mit einer erfindungsgemässen Abdichtung mit zwei Dichtelementen, und
- Fig. 6: den Übergang nach Fig. 5, wobei die Gehäuseteile ohne zusätzliches Klemmelement zusammengefügt sind.

### Weg zur Ausführung der Erfindung

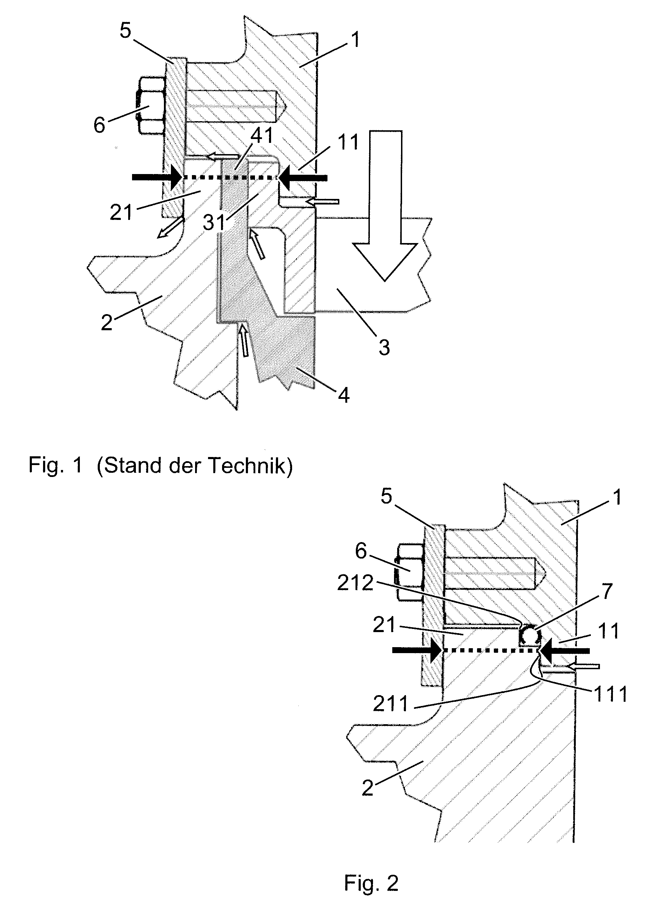

Fig. 1 zeigt einen Ausschnitt einer Abgasturbine im Bereich des Gehäuseübergangs zwischen dem Lagergehäuse 2 und dem Turbinengehäuse 1. Wie eingangs erwähnt, werden solche Abgasturbinen in Abgasturboladern zum Aufladen von Brennkraftmaschinen oder in Abgasnutzturbinen zum Umwandeln der in den Abgasen enthaltenen Energie in mechanische oder elektrische Energie eingesetzt. Das Lagergehäuse nimmt eine nicht dargestellte Welle auf, an deren einem Ende ein Turbinenrad und an deren anderem Ende je nach Anwendung das Verdichterrad des Turboladers oder aber eine Kupplung oder ein Befestigungsflansch angeordnet ist. Das Turbinengehäuse ist radial ausserhalb des Lagergehäuses angeordnet und wird beim Montieren in der Regel axial auf das Lagergehäuse aufgeschoben. Das Turbinengehäuse umfasst bei einer Abgasturbine mit einem radial angeströmten Turbinenrad in seinem radial äusseren Bereich den gaseintrittsseitigen Strömungskanal für die heissen, von der Brennkraftmaschine herkommenden Abgase. Über einen Leitapparat (Düsenring) 3 wird das Abgas auf die Laufschaufeln des Turbinenrades geführt, wie in den Figuren mit dem grossen, weissen Pfeil angedeutet.

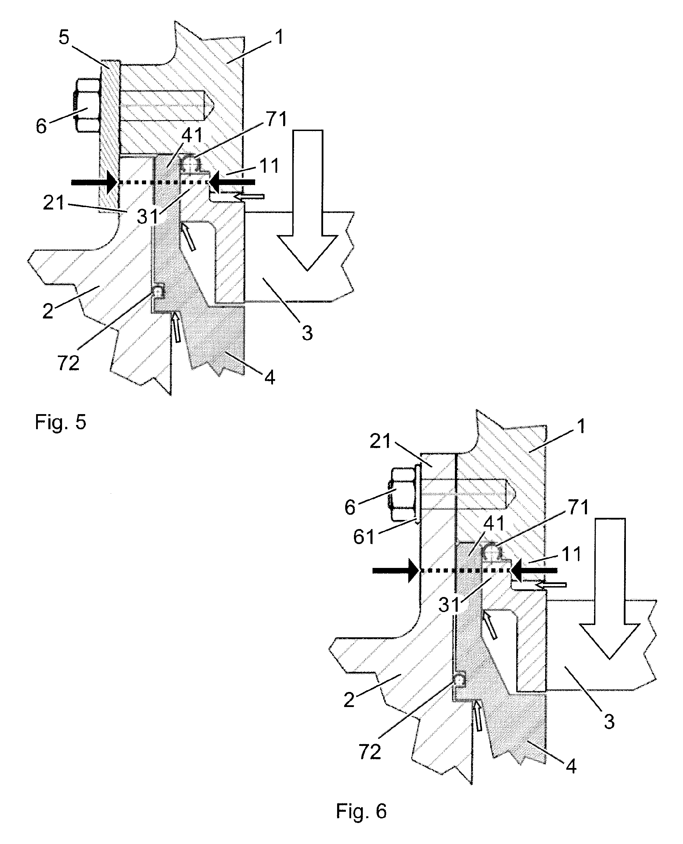

Im Übergangsbereich zwischen Lagergehäuse 2 und Turbinengehäuse 1, welcher in der Regel im wesentlichen kreisförmig - also etwa kreisrund oder als gequetschter Kreis oder als Vieleck - ausgestaltet ist, sorgt in der Regel ein Klemmverbund für den Zusammenhalt der Gehäuseteile. Wie den Figuren zu entnehmen ist, werden hierfür mit Klemmelementen (Laschen) 5 Lagergehäuse und Turbinengehäuse gegeneinander verklemmt. Beispielsweise werden entlang dem Umfang verteilt mehrere Klemmelemente 5 mit Schrauben 6 (oder Nieten) derart am Turbinengehäuse befestigt, dass jeweils axial zwischen den Klemmelementen 5 und einem Turbinengehäuse-Flansch 11 die Flansche der weiteren zu befestigenden Teile festgeklemmt werden. Alternativ kann, wie dies in Fig. 6 angedeutet ist, anstelle eines Klemmelements 5 direkt eines der Gehäuseteile mit einem verlängerten Flansch 21 als Klemmgegenstück fungieren, oder die Gehäuse können formschlüssig miteinander verbunden sein.

Die Klemmung ist in allen Figuren mit den schwarzen Pfeilen angedeutet. In der dargestellten Ausführungsform der Fig. 1 sind zwischen dem Klemmelement 5 und dem Turbinengehäuse-Flansch 11 der Flansch 31 des Düsenrings, der Flansch 41 der Zwischenwand und der Flansch 21 des Lagergehäuses angeordnet und festgeklemmt. Als Klemmelement können anstelle mehrerer einzelnen Laschen auch ein einziger, umlaufender Ring mit entsprechenden Öffnungen für die Schrauben oder zwei oder mehrere Ringteilsegmente Verwendung finden. Die Klemmelemente könnten alternativ auch am Lagergehäuse befestigt sein, wobei dann Turbinengehäuse oder etwa Zwischenwand und Düsenring, zwischen dem Klemmelement und dem Lagergehäuse festgeklemmt würden.

Wie erwähnt, übernimmt der geschilderte Klemmverbund nebst dem Zusammenhalten der verschiedenen Gehäuseteile auch eine zusätzliche Dichtfunktion zur Abdichtung des Spalts zwischen den Gehäuseteilen, wobei der Spalt von dem druckbeaufschlagten Abgaskanal durch die Gehäuseverbindung in die äussere Umgebung der Abgasturbine führt. Wird der Klemmverbund der Komponenten stark belastet, etwa aufgrund unterschiedlichen Wärmeausdehnungsverhaltens der gegeneinander verklemmten Gehäuseteilen sowie der ungleichen Materialtemperaturen bei extremen thermischen Belastungszyklen, kann sich die relativen Lage der einzelnen Bauteile zueinander ändern und der Spalt für Abgase durchlässig werden.

Erfindungsgemäss werden die Klemmfunktion und die Dichtfunktion in der Verbindung zwischen den Gehäusekomponenten aufgetrennt. Die Klemmfunktion wird unverändert beibehalten, indem die einzelnen Komponenten mit ihren Flanschen zwischen dem Klemmelement und dem Turbinengehäuse-Flansch festgeklemmt werden. Die Dichtfunktion zur Abdichtung des Spalts zwischen den Gehäuseteilen wird dagegen mit mindestens einem zusätzlichen Dichtelement realisiert.

Fig. 2 zeigt eine einfachste Ausführungsform der erfindungsgemässen Gehäuseverbindung zwischen dem Lagergehäuse 2 und dem radial ausserhalb angeordneten Turbinengehäuse 1. Die beiden Flansche 11 und 21 weisen je eine Auflagefläche 111 und 211 auf, welche mit Hilfe des Klemmelements 5 aufeinander gepresst werden. Die Auflageflächen können senkrecht zur Achse oder beispielsweise konisch ausgebildet sein. Zusätzlich weist mindestens eines der beiden Gehäuseteile eine sich in radialer Richtung erstreckende, umlaufende Ausnehmung auf, welche axial eine etwas zurückversetzt verlaufende zweite Auflagefläche 212 freigibt. Im Bereich der sich radial erstreckenden Ausnehmung ist zwischen den beiden axial gerichteten Auflageflächen 111 und 212 ein umlaufendes Dichtelement 7 angeordnet, welche den Spalt zwischen den Gehäuseteilen abdichtet. Beim Dichtelement handelt es sich optional um ein elastisches, hochtemperaturfestes Dichtelement, welches also ohne Beeinträchtigung seiner Dichtfunktion auch den im Bereich des Turbinengehäuses üblichen, hohen Temperaturen standhalten kann. Das Dichtelement ist vorteilhafterweise als ein in Klemmrichtung deformierbarer Ring ausgebildet. Solche Dichtungsringe sind an sich bekannt und in unterschiedlichen Formen und mit verschiedenen Profilen, etwa O-, U- oder C-förmig, erhältlich. Das Dichtelement ist vorteilhafterweise als ein in Umfangsrichtung geschlossener Ring ausgebildet, welcher bei der Montage des Turbinengehäuses im Bereich der umlaufenden Ausnehmung angeordnet und beim axialen Zusammenfügen von Turbinengehäuse und Lagergehäuse zwischen den beiden Auflageflächen geringfügig gequetscht wird. Durch diese Quetschung wird die Dichtung in axialer Richtung bewirkt.

Das Dichtelement 7 verhindert erfindungsgemäss auf jeden Fall, also auch, wenn die Auflageflächen 111 und 211 aus thermischen oder mechanischen Gründen geringfügig gegeneinander verschoben oder angewinkelt werden, dass die mit den kleinen weissen Pfeilen angedeuteten Leckageströmungen bis an die Aussenseite der Abgasturbine gelangen.

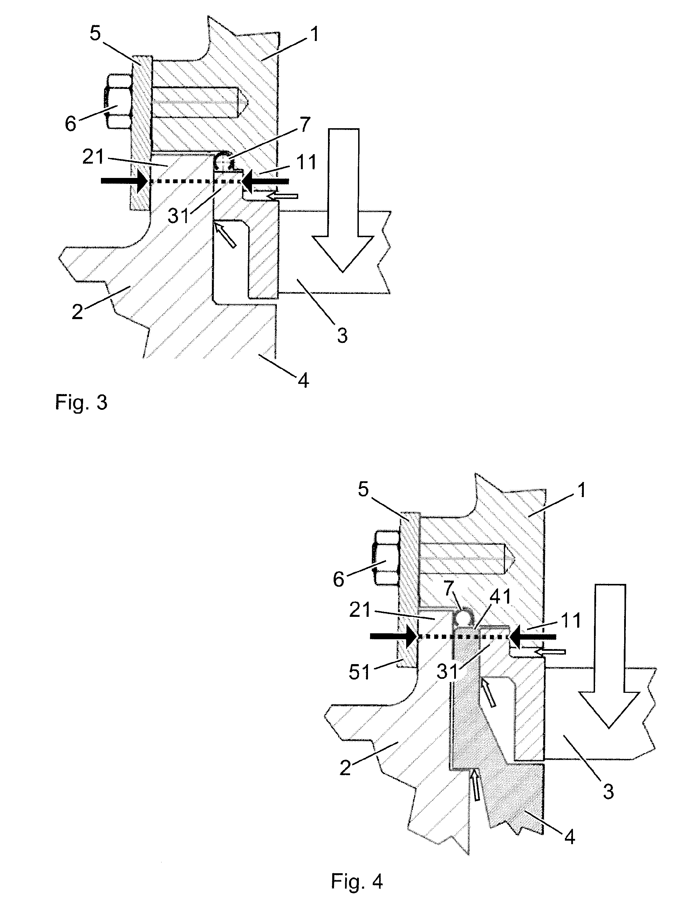

Fig. 3 bis 6 zeigen weitere Ausführungsformen der erfindungsgemässen Abdichtung, wobei jeweils die Anzahl oder Anordnung der verschiedenen Gehäuseteilen variiert.

In der Ausführungsform nach Fig. 3 ist zwischen den radial vorstehenden Flanschen 11 des Turbinengehäuses und 21 des Lagergehäuses ein Flansch 31 eines Gehäuseteils des Düsenringes 3 angeordnet und festgeklemmt. Wiederum sind die Auflageflächen für die Klemmfunktion und die Auflageflächen für die zusätzliche Abdichtung räumlich voneinander getrennt. Anstelle einer Ausnehmung in einem der Gehäuseteilen ist in dieser Ausführungsform einer der Flansche, konkret der in der Mitte angeordnete Flansch 31 des Düsenringes 3, radial verkürzt ausgebildet, so dass sich zwischen den beiden axial aussen liegenden Auflageflächen, derjenigen am Flansch des Turbinengehäuses 11 und derjenigen am Flansch des Lagergehäuses 21, eine Ausnehmung eröffnet, in welcher das Dichtelement 7 angeordnet ist. Wiederum verhindert das Dichtelement 7 das die Leckageströmung, welche gegebenenfalls die Klemmstellen passiert, durch den Spalt zwischen den Gehäuseteilen weiter in die Umgebung der Abgasturbine gelangt. Das Dichtelement 7 dichtete alle möglichen Wege vom Innern des Strömungskanals nach der Umgebung ab, und zwar genau an der einen Stelle, an der die Spalte zusammen kommen und in einen einzigen Spalt münden. Auf diese Weise ist es möglich, anstelle von einem zusätzlichen Bauteil, gemäss der Ausführungsform nach Fig. 4, auch zwei oder mehr Bauteile zwischen den Auflageflächen am Flansch des Turbinengehäuses und am Flansch des Lagergehäuses festzuklemmen und mit nur einem Dichtelement nach aussen abzudichten. Im dargestellten Beispiel ist also neben dem Flansch 31 des Düsenrings auch ein Flansch 41 der sogenannten Zwischenwand festgeklemmt. Die Auflageflächen an allen Flanschen sind miteinander in einer fest gepressten Verbindung, während im Bereich der radial gekürzt ausgebildeten Flanschen der Zwischenwand und des Düsenrings die Ausnehmung mit dem Dichtelement angeordnet ist. Da das Dichtelement 7, wie in der Darstellung, eine geringere axiale Ausdehnung als die Gesamtbreite der zwischen den Flanschen des Turbinengehäuses und derjenigen des Lagergehäuses festgeklemmten Komponenten aufweisen kann, kann die Auflagefläche des Turbinengehäuses oder des Lagergehäuses im Bereich des Dichtelements axial in Richtung der Klemmung vorgeschoben sein. Dadurch ergibt sich ein schmaler Kanal, welcher vom Dichtelement 7 nach radial aussen abgedichtet wird.

In der Ausführungsform nach Fig. 5 schliesslich ist wiederum zwischen den radial vorstehenden Flanschen 11 des Turbinengehäuses, 21 des Lagergehäuses und 31 des Düsenringes die Zwischenwand 4, exemplarisch für ein beliebiges weiteres Bauteil, angeordnet und festgeklemmt. Wiederum sind die Auflageflächen für die Klemmfunktion und die Auflageflächen für die zusätzliche Abdichtung räumlich voneinander getrennt. In dieser Ausführungsform sind die durch die mehreren festzuklemmenden Bauteile entstehenden, mehreren Spalte durch welche die Leckage erfolgt, jedoch mit separaten Dichtelementen 71 und 72 abgedichtet. So ist konkret ein erstes Dichtelement 71 zwischen dem Flansch 11 des Turbinengehäuses und dem Flansch 41 der Zwischenwand, in einer durch die radiale Kürzung des Flansches 31 des Düsenrings gebildeten Ausnehmung angeordnet. Das erste Dichtelement 71 ist in dieser Ausführungsform beidseitig von heissen, sich bei Temperaturwechsel in die gleiche Richtung dehnenden Teilen umgeben, dem Flansch 11 des Turbinengehäuses und dem Flansch 41 der Zwischenwand. Ein zweites Dichtelement 72 ist dagegen zwischen der Zwischenwand 4 und dem Lagergehäuse 2 auf einem kleinern Durchmesser angeordnet. Aufgrund der grösseren Distanz zum Strömungskanal, kann ein solches, zweites Dichtelement optional aus einem weniger Hitzebeständigen und daher in der Regel kostengünstigeren Material gefertigt sein, ohne dass dadurch die Gesamtwirkung der Dichtung beeinträchtigt würde.

Fig. 6 zeigt die Ausführungsform nach Fig. 5, jedoch ohne zusätzliches Klemmelement. Stattdessen ist das Turbinengehäuse 1 direkt am Flansch 21 des Lagergehäuses festgeschraubt. Um thermisch bedingte unterschiedliche radiale Ausdehnungen der beiden Gehäuseteile zu ermöglichen, kann im Flansch 21 des Lagergehäuses ein Langloch vorgesehen sein, in welchem sich das mit dem Turbinengehäuse 1 verbundene Befestigungsmittel 6 in radialer Richtung bewegen kann. Zudem ist das Befestigungsmittel optional mit einem Gleitelement 61 (Unterlagsscheibe) unterlegt.

### Bezugszeichenliste

- 1: Turbinengehäuse
- 11: Turbinengehäuse-Flansch
- 111: Auflagefläche
- 2: Lagergehäuse
- 21: Lagergehäuse-Flansch
- 211,212: Auflagefläche
- 3: Leitvorrichtung (Düsenring)
- 31: Leitvorrichtungs-Befestigungsflansch
- 4: Zwischenwand
- 41: Zwischenwand-Flansch
- 5: Klemmelement (Lasche)
- 6: Befestigungsmittel (Schraube)
- 61: Gleitelement
- 7,71,72: Dichtelement

## Patentansprüche

1. Turbinengehäuseverbindung, zur Verbindung zweier Gehäuseteile (1, 2) einer Turbine, bei welcher Verbindung die beiden Gehäuseteile (1, 2) form- und/ oder kraftschlüssig miteinander verbunden sind, **dadurch gekennzeichnet, dass**
in einem Spalt zwischen den miteinander verbundenen Gehäuseteilen (1, 2), welcher von einem Strömungskanal der Turbine in die Umgebung der Turbine führt, mindestens ein Dichtelement (7, 71, 72) angeordnet ist.

2. Turbinengehäuseverbindung nach Anspruch 1, **dadurch gekennzeichnet, dass** das Dichtelement (7, 71, 72) ein hochtemperaturfestes Material enthält.

3. Turbinengehäuseverbindung nach Anspruch 1, **dadurch gekennzeichnet, dass** die Gehäuseteile im Bereich der Verbindung im wesentlichen kreisförmig ausgestaltet sind, und dass das Dichtelement (7, 71, 72) als ein Ring ausgebildet ist.

4. Turbinengehäuseverbindung nach Anspruch 1, **dadurch gekennzeichnet, dass** das Dichtelement (7, 71, 72) als in Umfangsrichtung geschlossener Ring ausgebildet ist.

5. Turbinengehäuseverbindung nach Anspruch 1, **dadurch gekennzeichnet, dass** die Verbindung zwei äussere Gehäuseteile (1, 2) und mindestens ein weiteres dazwischen angeordnetes Teil (3, 4) umfasst.

6. Turbinengehäuseverbindung nach Anspruch 5, **dadurch gekennzeichnet, dass** mehrere zwischen den Gehäuseteilen (1, 2, 3, 4) verlaufende Spalte zumindest an einer Stelle in einen einzigen, durchgehend von dem Strömungskanal der Turbine in die Umgebung der Turbine verlaufenden Spalt münden, und dass dieser durchgehend verlaufende Spalt mit einem Dichtelement (7) abgedichtet ist.

7. Turbinengehäuseverbindung nach Anspruch 5, **dadurch gekennzeichnet, dass** mehrere zwischen den Gehäuseteilen verlaufende Spalte mit mehreren Dichtelementen abgedichtet (71, 72) sind.

8. Turbinengehäuseverbindung nach Anspruch 1, **dadurch gekennzeichnet, dass** die Gehäuseteile (1, 2) zur gegenseitigen Auflage ausgebildete Auflageflächen (111, 211) umfassen, und dass das mindestens eine Dichtelement (7) im einer in mindestens eine der Auflageflächen (211) eingelassene Ausnehmung angeordnet ist.

9. Abgasturbolader oder Nutzturbine, umfassend eine Turbinengehäuseverbindung nach einem der vorangehenden Anspruch.
